# EUROPEAN PATENT APPLICATION

(11) **EP 1 753 217 A2**
(43) Date of publication of application: **14.02.2007**
(21) Application number: 06300831.2
(22) Date of filing: 27.07.2006
(51) Int. Cl.: H04M 11/06, H04Q 1/02

(54) **RF Extender co-located with a remote DSL system**

(30) Priority: 09.08.2005 US 199167
(71) Applicant: Alcatel, 75008 Paris (FR)
(72) Inventor: Krstulich, Zlatko, Ottawa Ontario K2A 2V4 (CA)
(74) Representative: Hervouet, Sylvie

(57) **Abstract**

An integrated DSL and radio communication system is provided. A DSL system and a radio communication system are configured to share numerous components, such as environmental housing, a power subsystem, a data transfer subsystem, and backhaul cabling. By sharing such components, the complexity and cost of implementing remote DSL access and remote radio communications is reduced.

## Description

### Field of the invention

The invention relates to wireless transmission and DSL networks, and more particularly to remote access sites for such communication services.

### Background of the invention

One way of increasing the speed of Digital Subscriber Line (DSL) access for customers connected to a distant central office over long loops is to use remote DSL systems. These systems are located along the copper plant between the central office and the customers such that the remaining copper loop from the remote DSL system to the customer is typically under 2 km in length. Shorter copper loops allow for faster DSL data rates. An outdoor cabinet is placed within a neighbourhood, and local loops are provided from such cabinets to local residents. The local loops lead to a DSL Access Module (DSLAM) within the cabinet, and the DSLAM communicates with a central office through copper and fiber optical connections.

These remote DSL systems are expensive. The cabinet itself must be provided with environmental protection, such as waterproofing around the cabinet door, door opening alarms, physical entry controls, heating, and cooling typically through the use of air-to-air heat exchangers which prevents outdoor air from entering the cabinet. Optic fiber cabling entering the cabinet must be carefully managed through the provision of cable management spools to avoid excessive bending or crimping. Multiple-strand fiber optic backhaul cabling is also provisioned from the central office to the cabinet, alongside the multi-pair copper cabling. The DSLAM itself is provided with a power subsystem, incorporating alarming, power redundancy, DC-DC power converters, fans, and in some instances AC power converters with batteries configured in an uninterruptible power system configuration. A data transport subsystem provides communication with the central office, and includes OAM functions, data multiplexing, and in the case of fiber optic communications, optical transceivers.

With the increased use of wireless mobility services at people's homes, service providers are finding it difficult to extend proper coverage of services to these residential areas, due to the cost related to deploying many new radio transponder sites in areas with limited telecoms infrastructure. There are also significant non-financial barriers to deploying equipment and towers that add clutter to suburban landscapes. Remote low-power radio transponders may be placed throughout residential neighbourhoods to extend the range and coverage of radio communication networks within these neighbourhoods, such as those supporting mobile communications including but not limited to GSM or CDMA technology, or fixed and mobile wireless networks such as WiFi or Wi-Max technologies. However, deployment of numerous remote radio transponders is expensive and challenging, requiring re-deployment of many of the same facilities and support systems that may already be in existence or planned to be deployed for remote DSL systems.

### Summary of the invention

In accordance with one aspect of the invention, an integrated DSL and radio communication system is provided. The integrated system includes a cabinet providing environmental control, a cable bundle leading to the cabinet, a radio communication system within the cabinet which receives communications through the cable bundle, and a DSL system within the cabinet and which receives communications through the cable bundle.

The apparatus of the present invention allows co-location of remote DSL systems and remote radio communication systems in the same cabinet. This allows a remote DSL system and a remote radio communication system to use the same housing, backhaul cabling, power conditioning subsystem, and data transport subsystem. The shared housing will often be located next to a utility pole or street light, allowing convenient placement of an antenna for use by the radio communication system. Such co-location reduces cost of deployment of the remote systems, and in some cases will be the only feasible approach to extending radio systems where new curb-side facilities and new towers are prohibited by municipal or other authorities.

### Brief description of the drawings

The features and advantages of the invention will become more apparent from the following detailed description of the preferred embodiment(s) with reference to the attached figures, wherein:
FIG. 1 is a block diagram of an integrated remote DSL and radio communication system according to one embodiment of the invention; and
FIG. 2 is a block diagram of a power subsystem of FIG. 1 according to another embodiment of the invention.

It will be noted that in the attached figures, like features bear similar labels.

### Detailed description of the embodiments

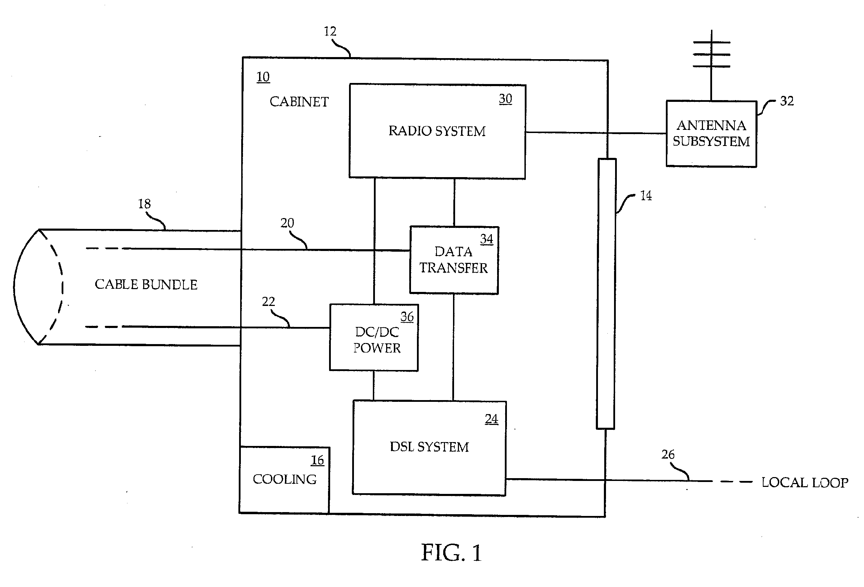

Referring to FIG. 1, an integrated remote DSL and radio communication system according to one embodiment of the invention is shown. The system includes a cabinet 10, which in operation would normally be placed at a location remote from a central office and in a neighbourhood of customers. The cabinet 10 includes a housing 12 which protects contents of the cabinet. The cabinet 10 includes a door 14 having a waterproof gasket. The cabinet 10 includes a cooling system 16 for removing heat from the cabinet 10 to the outside. The cooling system 16 is preferably a heat exchanger which exchanges no air between the inside and outside of the housing 12. The cabinet 10 also preferably includes a heater, door open alarm, and physical entry controls (none of which are shown in FIG. 1). Collectively, the housing 12, gasketed door 14, and cooling system 16, and the heater, door open alarm, and physical entry controls if present, provide environmental control to the cabinet 10.

A cable bundle 18 enters the cabinet 10. The cable bundle 18 provides backhaul cabling to components within the cabinet, and may lead directly to the central office or to a further backbone through which the central office can be reached. The cable bundle includes at least one optic fiber 20 and at least one copper wire pair 22. The optic fiber 20 leads through the cable bundle 18 to a data aggregator in the central office (not shown), which in turn is connected to a network management system as well as interconnecting to other wide area networks (not shown).

The cabinet 10 includes a Digital Subscriber Line (DSL) system for providing DSL access to at least one customer. For each customer, a local loop 26 runs from the DSL system 24 to the customer.

The cabinet 10 includes a radio communication system 30 which sends and receives wireless signals to at least one customer through a low-power antenna subsystem 32. The antenna subsystem 32 may contain active circuits to enable various smart antenna schemes, or to partition radio communications circuitry to allow the possibility to locate radio subsystems with the antenna subsystem. The radio communication system 30 and the antenna subsystem 32 together provide customers with remote wireless communications, which may include fixed wireless access, mobile communications using standards such as GSM or CDMA, or fixed and mobile wireless access using standards such as Wi-Fi 802.11 or Wi-Max 802.16. Communications services provided over such wireless networks may include voice communication, data, broadcast video or radio, or remote utility reading services.

The cabinet 10 includes a data transfer subsystem 34. The data transfer subsystem 34 provides communication between a central office and the radio communication system 30 through the cable bundle 18, preferably through an optic fiber. The data transfer subsystem 34 also provides communication between a central office and the DSL system 24, preferably through an optic fiber. The data transfer subsystem 34 includes optical interface components, including electro-optical converters, optical transmitters, and optical receivers. The data transfer subsystem 34 receives optical signals over the optic fiber 20, converts them to electric signals, and passes them to either the radio communication system 30 or the DSL system 24. The data transfer subsystem 34 receives electrical signals from each of the radio communication system 30 and the DSL system 24, converts them to optical signals, and transmits them over the optic fiber 20 to the central office. In this way the DSL system 24 and the radio communication system 30 share electro-optical components and communications multiplexing functions, reducing the cost of the integrated system at the remote end, as well as at the central office where only a single communication facility per remote would need to be terminated for both DSL and radio-communication services.

The data transfer subsystem 34 also includes alarm functionality for the cabinet 10. For example, if there is a power failure in the cabinet, or if the cabinet is tampered with, the data transfer subsystem 34 transmits an alarm signal to the central office. In this way the DSL system 24 and the radio communication system 30 share system alarm functionality, although DSL system alarms and radio communication system alarms would still be treated separately by the individual systems.

The data transfer subsystem 34 also includes OAM functionality by providing a proxy function to administrators in the central office. An administrator wishing to perform OAM functions on either the radio communication system 30 or the DSL system 24 need only communicate with a single proxy, the data transfer subsystem 34. The data transfer subsystem 34 is connected to the radio communication system 30 and the DSL system 24 by using a data transport layer, and OAM is carried out over a virtual link over the data transport layer. By sharing OAM functionality, the combined complexity of the DSL system 24 and the radio communication system 30 can be reduced, and also the complexity of the network management system responsible for managing the remote.

The cabinet 10 includes a power subsystem 36. The power subsystem 36 receives power over the copper wire pair 22. The power subsystem 36 includes at least one power converter for converting the power into a form usable by the radio communication system 30 and the DSL system 24, and passes the converted power to the two systems. The power subsystem 36 also includes cooling, alarming, hot-swapping, and redundancy so as to provide a high-availability power supply to each of the radio communication system 30 and the DSL system 24. By sharing the power subsystem 36, the cost of the DSL system 24 and the radio communication system 30 can be reduced.

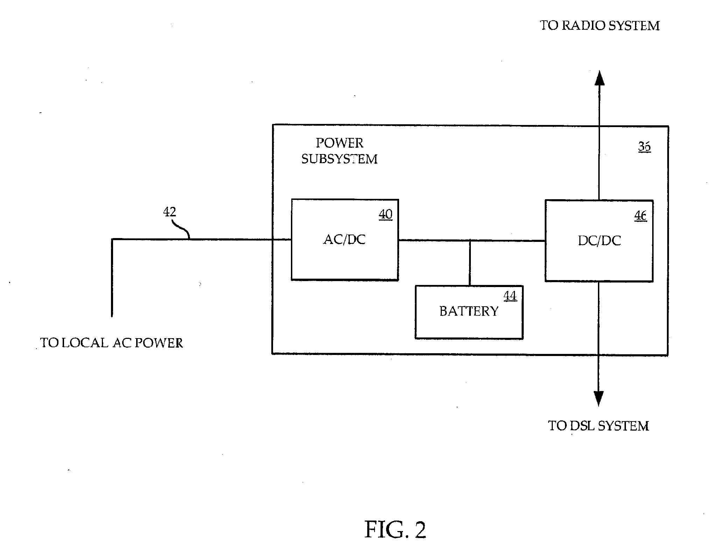

In an alternative embodiment, the power subsystem 36 accepts external AC power input. Referring to FIG. 2, a power subsystem according to an alternate embodiment of the invention is shown. The power subsystem 36 is located within the cabinet 10, as described above with reference to FIG. 1. The power subsystem 36 includes an AC/ DC converter 40 which receives external AC power 42, preferably from an AC power source near the cabinet 10. The AC/ DC converter provides DC power to a DC/ DC converter 46 which supplies DC power to the radio subsystem 30 and the DSL subsystem 24. The power subsystem 36 also includes a battery 44 in an uninterruptible power supply configuration.

The invention has been described such that radio communication system 30 and the DSL system 24 share each of the environmental control, the cable bundle, the data transfer subsystem, and the power subsystem. More generally, the integrated DSL system and radio communication system need only share the environmental control and the cable bundle for advantages of the invention to be realized. Each of the DSL system and the radio communication system can include its own data transfer subsystem and power subsystem. In such an embodiment, each of the DSL system and radio communication system would communicate with a central office through the single cable bundle 18, would be contained within the same housing 12 accessible through the same gasketed door 14, and share the same cooling system 16.

In yet another embodiment, the DSL system and the radio communication system share the environmental control and the cable bundle, and one of the power subsystem or the data transfer subsystem. Additionally, the DSL system and the radio communication system may share only some components of the data transfer subsystem, either with or without the sharing of the power subsystem. For example, the DSL system and the radio communication system may include their own respective optical interfaces for communicating customer data signals to and from the central office, yet may share OAM functionality. Any sharing of subsystems or components thereof will result in advantageous cost saving and advantageous simplification of layout and management, though the full advantages are realized when all subsystems and components are shared.

The embodiments presented are exemplary only and persons skilled in the art would appreciate that variations to the embodiments described above may be made without departing from the spirit of the invention. The scope of the invention is solely defined by the appended claims.

## Claims

1. An integrated Digital Subscriber Line (DSL) and radio communication system, comprising:
a cabinet providing environmental control;
a cable bundle leading to the cabinet;
a radio communication system within the cabinet and receiving communications through the cable bundle; and
a DSL system within the cabinet and receiving communications through the cable bundle.

2. The integrated DSL and radio communication system of claim 1 wherein the cabinet includes a gasketed door, a housing providing environmental protection, heating, physical entry controls, a door open alarm, and a cooling system.

3. The integrated DSL and radio communication system of claim 1 further comprising a power subsystem which provides power to the radio communication system and to the DSL system.

4. The integrated DSL and radio communication system of claim 3 wherein the power subsystem receives power over a copper wire within the cable bundle.

5. The integrated DSL and radio communication system of claim 3 wherein the power subsystem receives power from an AC power source located near the cabinet.

6. The integrated DSL and radio communication system of claim 1 further comprising a data transfer subsystem which provides communication between the cable bundle and the radio communication system and between the cable bundle and the DSL system.

7. The integrated DSL and radio communication system of claim 6 wherein the data transfer subsystem comprises OAM functionality for the radio communication system and for the DSL system.

8. The integrated DSL and radio communication system of claim 6 wherein the data transfer subsystem comprises a system alarm.

9. The integrated DSL and radio communication system of claim 6 wherein the data transfer subsystem comprises:
a data transport layer shared by the radio communication system and the DSL system; and
optical interface components for providing communication between the radio communication system and a central office through the cable bundle and between the DSL communication system and the central office through the cable bundle, the optical interface components including at least one optical receiver, at least one optical transmitter, and at least one optical-electrical converter.
